Europäisches Patentamt

European Patent Office

Office européen des brevets

(11) Publication number: **0 189 742**
**A1**

## (12) EUROPEAN PATENT APPLICATION

(21) Application number: **86100002.4**

(22) Date of filing: **02.01.86**

(51) Int. Cl.⁴: **G 01 N 27/90**

(30) Priority: **08.01.85 SE 8500065**

(43) Date of publication of application:
**06.08.86 Bulletin 86/32**

(84) Designated Contracting States:
**AT CH DE FR GB LI**

(71) Applicant: **TÖRNBLOMS KVALITETSKONTROLL AB**
**Vikhus Rytterne**
**S-725 92 Västeras(SE)**

(72) Inventor: **Törnblom, Bengt Hjalmar**
**Vikhus Rytterne**
**S-725 92 Västeras(SE)**

(74) Representative: **Boecker, Joachim, Dr.-Ing.**
**Rathenauplatz 2-8**
**D-6000 Frankfurt a.M. 1(DE)**

(54) Device for transmitting signals and/or data.

(57) Device for transmitting signals and/or data between a measuring device (1) and a transducer (2), the two being mechanically connected with each other and the transducer being movable, for example rotatable, relative to a test object (3), comprising a rotatable body (5) journalled in a bearing (14) in or on a base (15), one transducer (2) eccentrically journalled (8) in the rotatable body (5), a mechanical connection link (13), for example a hollow pendulum arm, arranged between the base (15) and the transducer (2), a coupling (11), via which said mechanical connection link (13) is connected to the base (15) while the centre (7) of said link is located at the centre axis (6) of the rotatable body, a coupling (12) via which said mechanical connection link (13) is connected to the transducer (2), and a conductor (4) between the measuring device (1) and the transducer (2), disposed through or near the couplings (11, 12). According to the invention said two couplings consist of flexible couplings for transmitting a rotary motion and/or a torsional moment, for example hollow flexible bearings which are blocked or locked by means of driver or carrier pins (10) to prevent the transducer (2) from rotating to any major extent relative to the base (15), thus preventing the conductor/conductors (4) from being damaged by twisting.

FIG.1

Rathenauplatz 2-8
Telefon (06 11) 28 23 55
Telex 4489-035 tax d
26.12.1985
0189742

Törnbloms Kvalitetskontroll AB
725 92 Västeras / Schweden


Device for transmitting signals and/or data


The invention relates to a device for transmitting signals and/or data according to the precharacterising part of claim 1.

A frequently occurring problem in connection with the transmission of signals and media between a movable, for example rotatable, transducer and a stationary unit, for example a measuring device, is the impossibility to transmit signals and media in a simple manner. Cables and hoses alone cannot be used since these are easily destroyed by twisting due to the movement and rotation of the transducer relative to the measuring device. In eddy current testing, for example, attempts have been made in certain cases to overcome the problem by making use of so-called slip ring transmissions for transmitting signals. However, such a slip ring arrangement is mechanically very sensitive, and it is almost invariably very easily damaged, which makes it a weak spot in the system. In eddy current testing, rapid signal transmissions with high stability as regards transition resistance, etc., are often required, which means that a simple galvanic connection is normally superior.

The invention aims at developing a device of the above-mentioned kind, the signal transmission of which is of simple design and exhibits good transmission properties without making the elements of the transmission liable to fracture by bending or twisting.

To achieve this aim the invention suggests a transmitting device according to the introductory part of claim 1, which is characterized by the features of the characterizing part of claim 1.

Further developments of the invention are characterized by the features of the additional claims.

The invention can be employed in, for example, crack detection by means of eddy current testing. The concept "quantity" then also includes, for example, electrical impedance changes in the transducer caused by, for example, surface cracks etc. In other words, quantity is a general and extensive concept.

One field of application of special interest for the invention is eddy current testing, as described, for example, in SE-A-7507857-6, SE-A-7813344-4, SE-A-8302738-3, Euro-PCT-A-SE83/00409, EP-A-85101296.3 and EP-A-85101525.5. In other words, the invention can be regarded as an important complement to these separate inventions, which for example, can considerably increase the performance as far as the velocity of scanning, and the like, is concerned.

One reason for the frequent desire to rotate the transducer is the wish to scan as large a portion of the surface of the test object as possible per unit of time. By superimposing a rotary motion on, for example, the normal travelling movement of the transducer relative to the test object, this can be achieved in a simple manner. Another reason may be the desire, for example in connection with eddy current testing, to cross the cracks to be detected as perpendicularly as possible.

The invention will now be described in greater detail with reference to the accompanying drawings showing - by way of example - in

Figure 1 an embodiment of the invention in cross-section,

Figure 2 an example of a flexible bearing as a part of a device according to the invention.

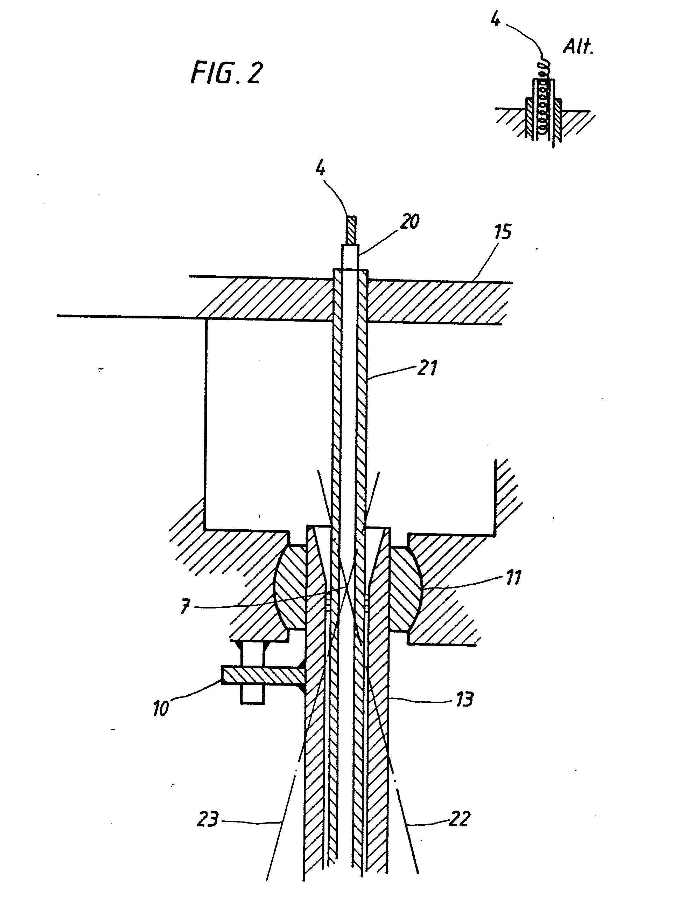

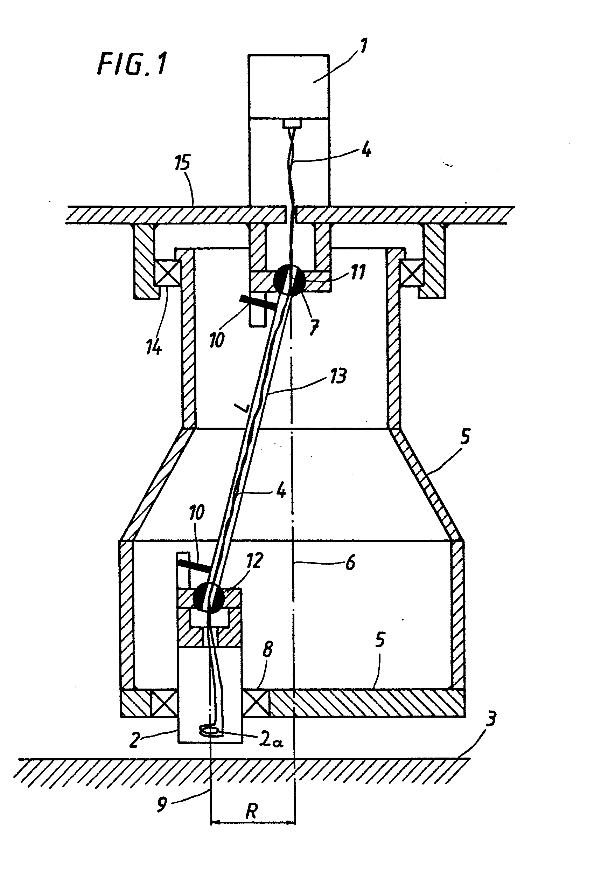

For sake of simplicity, the description has been restricted to an example of an application in which the transducer consists of a coil 2a of eddy current type with a measuring device 1 connected thereto. These reference numerals refer to Figure 1 which shows one of many feasible embodiments of the invention.

The transducer 2 rotates about its centre axis 6, its task being to sense the surface of the test object 3 inductively with regard to irregularities such as, for example, surface cracks and the like. The transducer 2 is journalled by means of bearings 8 in a rotatable body 5, which in turn is journalled in a base or foundation 15 by means of bearings 14. The rotatable body 5 may be rotated by various means, for example by a motor and chain or a cone belt, etc. Because of the eccentric location of the transducer 2 in or on the rotatable body 5, the transducer 2 will be moved around in a circular path across the surface of the test object 3 when the rotatable body 5 rotates. Because the transducer 2 is journalled in the rotatable body 5 via bearings 8, the transducer 2 can be prevented in a simple manner from rotating about its own centre axis 9 while the rotatable body 5 is rotating . The transducer 2 is connected to the base 15 by means of a tube or arm 13 with associated flexible bearings 11 and 12, the tube/arm 13 being referred to here as a "pendulum arm". Inside the pendulum arm 13 flexible signal and/or media conveyors are disposed, for example electrical cables and water hoses. The conductors 4 connect the transducer 2, for example galvanically, to the electronic measuring device 1. The conductors 4 may consist of both signal and/or media conductors.

By making the pendulum arm 13 flexible in the longitudinal direction, the transducer coil 2a may, for example, be caused to move three-dimensionally, which may be of value in the case of, for example, curved surfaces of a test object.

By providing the pendulum arm 13 with carriers 10 or other suitable blocking means at both ends, the transducer 2 is prevented from rotating relative to the measuring device 1 and the conductors 4 thus protecting these signal and media conductors from any damaging twisting. By placing the upper bearing 11 so that its joint or fulcrum 7 is situated at the centre axis 6 of the rotatable body 5, minimum movement at the joint 7 will occur. Due to this, mechanical fatigue of the signal and/or media conveyors will, for example, be small, provided they are disposed through or close to the joints in the bearings 11, 12. It should be noted that the upper joint 7 is largely stationary relative to the measuring device 1 in spite of the fact that the transducer 2 may rotate at a considerable speed relative to the test object. This is essential. It is, of course, advantageous if the flexible bearing 12 adjacent to the transducer 2 is placed at the centre axis 9 of the transducer 2.

Practical tests with flexible conductors of standard type, for example foil sheet cables, have shown that it is possible to achieve very long operating times without any rupture occurring on conductors, etc. The foil sheet cable has the additional advantage of being inexpensive and robust.

The rotatable body 5 may advantageously rotate continuously. However, if desired, it may also perform an oscillating

movement by continuously reversing its direction of rotation. This kind of movement may be valuable for certain applications, for example on surfaces difficult to reach or near edges and the like. The rotatable body 5 may then have the shape of, for example, an arm.

By locating the centre axis 6, which is the axis of ration of the rotatable body 5, perpendicular to the surface of the test object 3, the distance between the transducer 2 and the test object can be kept largely constant, which, for example in connection with eddy currents, may be a considerable advantage. The same applies to the centre axis 9 of the transducer 2. For keeping this so-called "lift-off" distance constant, it is advantageous to use an automatic system which, for example, raises and lowers the base 15 while simultaneously adjusting the angle of the centre axis 6 relative to the test object.

During testing of hot objects such as, for example, continuously cast billets, cooling of the transducers, etc., is often required. Therefore, a cooling medium, such as water, may be conducted through hoses to the transducer. Also the bearings may need cooling by water in a similar way, for example via cooling water channels.

The invention also comprises those special cases where one or more of the bearings have been replaced by flexible, for example resilient, mechanical arrangements. As an example of this, both the bearings 11 and 12 in Figure 1 may be replaced by helical or spiral springs which are then to be regarded as bearings. The spring may then also include the carrier function. In other words, the spring may act simultaneously as a bearing and as a carrier.

Since one of the basic ideas behind this invention is to overcome the problems of fatigue in so-called movable trans-

28.12.1985
21 682 PE
0189742

ducers, it is particularly important that the conductors do not break at the most exposed points which, for example, may be the bearings 11 and 12, where the movement, though greatly limited, is not negligible. In order further to reduce the risk of fatigue, it is therefore advantageous to place the conductors in, for example, a polyurethane hose which is both flexible and fatigue-resistant, whereby the bending of the conductors is distributed in a better way along the length of the conductors. At the same time the often soft position of the conductor is stabilized. In connection with eddy currents, for example, this may be a very great advantage with respect to the technics of measurement.

In certain applications involving considerable endurance stress, it may be advantageous for the same reason to design the conductor as a helical or folded wire or foil, in order to reduce the bending of the conductor per unit of length. This, of course, increases the life of the conductor.

The term "transducer" comprises greatly differing components or units; in other words, "transducer" covers in this connection a generally extensive concept. For example, it may include any associated electronic equipment, for example located in immediate proximity to the transducer.

By "signals" is meant, in addition to conventional signals, also the transmission of current and voltage, for example to supply electronic components of the transducer.

When the transducer 2 rotates around the centre axis 6 of the rotatable body 5 on a path having the radius R, it is seen with reference to Figure 1 that it may often be important that the relationship between the length L of the pendulum arm and the radius R of the path of rotation is great, in order to minimize the movement of the joint. Practical

23.12.1985
0189742

tests have shown that the ratio L/R should be greater than 5 (preferably ³ 10) to obtain a long life of the conductors 4.

Figure 2 shows, by way of example, a cross-section of a possible design of the upper flexible bearing 11. It should be noted that the conductor 4 with associated insulation 20 has here been arranged in a polyurethane hose 21, which is fixed to the base. When the pendulum arm 13 moves between the extreme positions 22 and 23, the hose 21 relieves the conductor 4 in an efficient way, which often considerably extends the life of the conductor. In order to prevent tension stresses in the conductor 4 and the hose 21, it is often suitable to arrange the hose 21 in a loop or bend. Inside the hollow pendulum arm 13 the hose 21 can also be fixed with, for example, silicone rubber or the like.

The afore-described embodiments of the invention can be varied in many ways within the scope of the following Claims.

C L A I M S

1. Device for transmitting signals and/or data between a measuring and/or control device (1) and at least one transducer (2), the two being mechanically connected with each other and the transducer being movable, for example rotatable, relative to a test object (3), comprising at least one rotatable body (5) journalled in a bearing (14) in or on a base or holder (15), at least one transducer (2) eccentrically journalled (8) in or on the rotatable body (5), at least one mechanical connection link (13), for example a hollow pendulum arm, arranged between the base (15) and the transducer (2), at least one coupling (11), via which said at least one mechanical connection link (13) is connected to the base (15) while the centre (7) of said link is located on or near the centre axis (6) of the rotatable body, at least one coupling (12) via which said at least one mechanical connection link (13) is connected to the transducer (2), and at least one conductor (4) between the measuring and/or control device (1) and the transducer (2), disposed through or near the couplings (11, 12), c h a r a c t e r- i z e d  in that  said at least two couplings consist of flexible couplings for transmitting a rotary motion and/or a torsional moment, for example hollow flexible bearings which are blocked or locked by means of driver or carrier pins (10) to prevent the transducer (2) from rotating to any major extent relative to the base (15), thus preventing the conductor/conductors (4) from being damaged by twisting.

2. Device according to claim 1, c h a r a c t e r i z e d in that  a cooling medium, such as water, is transported to the transducer via a channel, for example a polyurethane hose.

3. Device according to any of the preceding claims, c h a- r a c t e r i z e d  in that at least one of the flexible

23.12.1935
0189742

couplings (11, 12) comprise flexible bearings, for example hollow flexible bearings through which conductors (4) are drawn.

4. Device according to any of the preceding claims, c h a r a c t e r i z e d  in that at least one conductor (4), for example an multi- and fine-wire cable, is disposed by means of a stabilizing arrangement, for example inside a polyurethane hose, adjacent to at least one of the flexible couplings (11, 12).

5. Device according to any of the preceding claims, c h a r a c t e r i z e d  in that the ratio (L/R) between the length (L) of the mechanical connection link (13) and the radius of rotation (R) of the transducer is greater than 5.

6. Device according to any of the preceding claims, c h a r a c t e r i z e d  in that conductors (4) are disposed inside the mechanical connection link, for example the hollow pendulum arm (13).

7. Device according to any of the preceding claims, c h a r a c t e r i z e d  in that the axis of rotation (6) of the rotatable body is largely perpendicular to the surface of the test object (3).

8. Device according to any of the preceding claims, c h a r a c t e r i z e d  in that at least one conductor consists of bent and/or folded wire or foil.

9. Device according to any of the preceding claims, c h a r a c t e r i z e d  in that the mechanical connection link, for example the pendulum arm (13), is flexible in the longitudinal direction.

28..12..1985
0189742

*4*

*Alt.*

FIG. 2

28.12.1985

0189742

FIG.1

## EUROPEAN SEARCH REPORT

European Patent Office

Application number

EP 86 10 0002

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 137 362 (GENERAL ELECTRIC COMPANY) * figure 1; page 1, lines 101-105, 80-128; claims * | 1 | G 01 N 27/90 |
| A | GB-A-1 513 192 (DOMINION FOUNDRIES AND STEEL LTD.) * page 2, lines 63-106; figure 2; claims * | 1 | |
| P,D A | EP-A-0 152 904 (TÖRNBLOMS KVALITETSKONTROLL AB) * claims * | 1 | |
| P,D A | EP-A-0 152 066 (TÖRNBLOMS KVALITETSKONTROLL AB) * claims * | 1 | |

TECHNICAL FIELDS SEARCHED (Int. Cl.4)

G 01 N 27/00

The present search report has been drawn up for all claims

| Place of search BERLIN | Date of completion of the search 30-04-1986 | Examiner VINSOME R M |
|---|---|---|